# EUROPÄISCHE PATENTSCHRIFT

(11) **EP 1 566 258 B1**
(45) Veröffentlichungstag und Bekanntmachung des Hinweises auf die Patenterteilung: **31.10.2007**
(21) Anmeldenummer: 05000444.9
(22) Anmeldetag: 12.01.2005
(51) Int. Cl.: B29C 49/78, B29C 49/36, B29C 49/06

(54) **Vorrichtung zur Bearbeitung von Werkstücken**
Apparatus for machining workpieces
Appareil pour l'usinage de pièces

(30) Priorität: 20.02.2004 DE 102004008400
(43) Veröffentlichungstag der Anmeldung: 24.08.2005
(73) Patentinhaber: SIG Technology Ltd., 8212 Neuhausen Rhine Falls (CH)
(72) Erfinder: Herklotz, Thorsten, 22926 Ahrensburg (DE); Dose, Wolfgang, 21109 Hamburg (DE)
(74) Vertreter: Klickow, Hans-Henning

(56) Entgegenhaltungen:
- EP-A- 1 306 195
- WO-A-03/078136
- DE-A1- 19 909 307
- US-A1- 2002 127 294
- US-B1- 6 186 760

## Beschreibung

Die Erfindung betrifft eine Vorrichtung zur Bearbeitung von Werkstücken, die ein rotierendes Tragrad aufweist, auf dem mindestens zwei Bearbeitungsstationen angeordnet sind und das mindestens eine Drehverbindung zur Signalübertragung aufweist, und bei der an die Drehverbindung mindestens ein Bus zur Datenübertragung angeschlossen ist.

Derartige Drehverbindungen können zur Übertragung von elektrischer Energie, von Steuerungssignalen, von Meßsignalen oder von allgemeinen analogen oder digitalen Daten verwendet werden. Die Drehverbindungen sind beispielsweise als Schleifringdrehverteiler ausgebildet.

Die einleitend genannten Vorrichtungen werden beispielsweise zur Herstellung von blasgeformten Behältern eingesetzt. Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei Blasstationen, die insbesondere dafür geeignet sind, mehrere Kavitäten zur Behälterformung aufzunehmen, werden neben aufklappbaren Formen auch parallel zueinander angeordnete Platten als Formträger verwendet.

Aus der EP-A-1 306 195 ist es bereits bekannt, auf einem rotierenden Blasrad angeordnete Blasstationen über eine Drehverbindung zur Signalübertragung an einen Bus zur Datenübertragung anzuschließen. Der Bus dient zur Übertragung von Prozeßdaten, die meßtechnisch im Bereich des Blasrades erfaßt wurden.

Die US-B1-6,186,760 beschreibt ebenfalls eine Blasmaschine mit einem rotierenden Blasrad, auf dem Blasstationen angeordnet sind. Auf dem Blasrad erfaßte Prozeßdaten werden über eine Funkstrecke zu einem außerhalb des Blasrades angeordneten Computer übertragen.

In der WO 03/078136 A wird eine weitere Vorrichtung mit einem rotierenden Blasrad beschrieben, das mit Blasstationen versehen ist. Die blastechnische Herstellung der Behälter erfolgt durch Zündung eines explosiven Gasgemisches, das zuvor in für die Behälterformung vorgesehene Vorformlinge eingeleitet wird. Die Prozeßgaszuführung erfolgt unter Verwendung einer computergesteuerten ventilanordnung.

Die bislang verwendeten Drehverbindungen zur Signalübertragung sind sowohl auf dem Tragrad als auch im stationären Bereich der Maschine mit Leitungen zur Daten-, Energie- und Signalübertragung gekoppelt, die lediglich eine relativ geringe Übertragungsrate von Informationen pro Zeiteinheit zulassen. Diese begrenzten Möglichkeiten zur Datenübertragung reduzieren die Möglichkeiten zur Steuerung und Regelung der Vorrichtung, darüber hinaus wird auch der Benutzungskomfort reduziert, da nur eine begrenzte Anzeige von Meßwerten möglich ist. Darüber hinaus muß auch die gerätetechnische Struktur der verwendeten Steuerungs- und Regelungskomponenten an die verfügbaren Übertragungskapazitäten angepaßt werden.

Aufgabe der vorliegenden Erfindung ist es, eine Vorrichtung der einleitend genannten Art derart zu konstruieren, daß eine vergrößerte Kapazität zur Datenübertragung bereitgestellt wird.

Diese Aufgabe wird erfindungsgemäß dadurch gelöst, daß der Bus mindestens einen Ethernet-Bus aufweist und daß eine Steuerung für die Bearbeitungsstation mindestens teilweise stationär außerhalb des Tragrades angeordnet und über die Drehverbindung sowie über den Bus derart mit auf dem Tragrad angeordneten Aktoren im Bereich der Bearbeitungsstation verbunden ist, daß der Ethernet-Bus sowohl an ein stationäres Korrespondenzelement der Drehverbindung als auch an ein mit dem Tragrad verbundenes Basiselement der Drehverbindung angeschlossen ist.

Die Verwendung des Bussystems zur Datenübertragung ermöglicht wesentlich erhöhte Datenübertragungsraten. Hierdurch können beispielsweise zu einem Bedienterminal erheblich mehr und aussagekräftigere Daten zu gemessenen Parametern, beispielsweise zu Druck, Temperatur und Positionierung von einzelnen Bauelementen, übertragen werden. Darüber hinaus ist es möglich, mindestens einen Teil der gemäß dem Stand der Technik auf dem Tragrad angeordneten Steuerungskomponenten im stationären Teil der Maschine anzuordnen und lediglich die Steuerungsinformationen zu den auf dem Tragrad angeordneten Aktoren zu übertragen. Der Aufbau des Tragrades kann hierdurch erheblich vereinfacht werden, darüber hinaus ergibt sich auf dem Tragrad auch eine erhebliche Platzeinsparung.

Eine sehr hohe Datenübertragungsrate wird dadurch unterstützt, daß die Drehverbindung zur optischen Datenübertragung ausgebildet ist.

Ebenfalls können hohe Datenübertragungsraten dadurch realisiert werden, daß die Drehverbindung zur Datenübertragung unter Verwendung elektromagnetischer Wellen ausgebildet ist.

Eine verschleißarme Realisierung wird dadurch unterstützt, daß die Drehverbindung kontaktlos ausgebildet ist.

Eine konstruktiv einfache Realisierung wird dadurch bereitgestellt, daß die Drehverbindung zur elektrischen Datenübertragung ausgebildet ist.

Insbesondere ist daran gedacht, daß die Drehverbindung als ein Schleifring-Drehverteiler ausgebildet ist.

Eine typische Ausführungsform wird dadurch definiert, daß der Bus zur elektrischen Datenübertragung ausgebildet ist.

Zur Bereitstellung nochmals gesteigerter Datenübertragungsraten wird vorgeschlagen, daß der Bus zur optischen Datenübertragung ausgebildet ist.

Für Datenübertragungsraten bis zu 100 Mbit/s erweist es sich als vorteilhaft, daß der Bus als ein Ethernet-Bus ausgebildet ist.

Bei Datenübertragungsraten bis zu 12,5 Mbit/s wird vorgeschlagen, daß der Bus als ein Profibus ausgebildet ist.

Zur Abdeckung eines sehr großen Spektrums an möglichen Datenübertragungsraten ist auch daran gedacht, daß der Bus als ein USB-Bus ausgebildet ist.

Eine optimale Systemanpassung an gleichzeitig oder sequentiell auftretende unterschiedlich große Datenübertragungsraten erfolgt dadurch, daß der Bus mindestens einen Ethernet-Bus, mindestens einen Profibus sowie mindestens einen USB-Bus aufweist.

Gemäß einer konstruktiven Variante ist vorgesehen, daß sich die Drehverbindung mindestens bereichsweise um Zuführleitungen eines versorgungselementes herumerstreckt.

Gemäß einer bevorzugten Ausführungsform ist daran gedacht, daß die Bearbeitungsstationen zur Bearbeitung von Behältern ausgebildet sind.

Insbesondere ist es möglich, daß die Bearbeitungsstationen zur Bearbeitung von thermoplastischen Behältern ausgebildet sind.

Ein besonders bevorzugtes Anwendungsgebiet wird dadurch definiert, daß die Bearbeitungsstationen zur Bearbeitung von flaschenförmigen Behältern ausgebildet sind.

Eine Anwendung bei Hochleistungsmaschinen kann dadurch erfolgen, daß das Tragrad als Rad einer Blasmaschine ausgebildet ist.

Eine weitere Ausführungsvariante besteht darin, daß das Tragrad als Rad einer Plasmabeschichtungsmaschine ausgebildet ist.

Ein weiteres Anwendungsgebiet wird dadurch erschlossen, daß das Tragrad als Rad einer Füllmaschine ausgebildet ist.

Eine Reduktion der rotierenden Masse im Bereich des Tragrades kann dadurch erfolgen, daß eine Steuerung für die Bearbeitungsstation mindestens teilweise stationär außerhalb des Tragrades angeordnet und über die Drehverbindung sowie über den Bus mit Aktoren im Bereich der Bearbeitungsstation verbunden ist.

Darüber hinaus erweist es sich als vorteilhaft, daß eine Steuerung für die Bearbeitungsstation mindestens teilweise stationär außerhalb des Tragrades angeordnet und über die Drehverbindung sowie über den Bus mit Sensoren im Bereich der Bearbeitungsstation verbunden ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine Seitenansicht einer kombinierten Anordnung eines Versorgungselementes sowie einer Drehverbindung zur Signalübertragung mit angeschlossenem Bussystem im Bereich eines rotationsfähigen Tragrades.

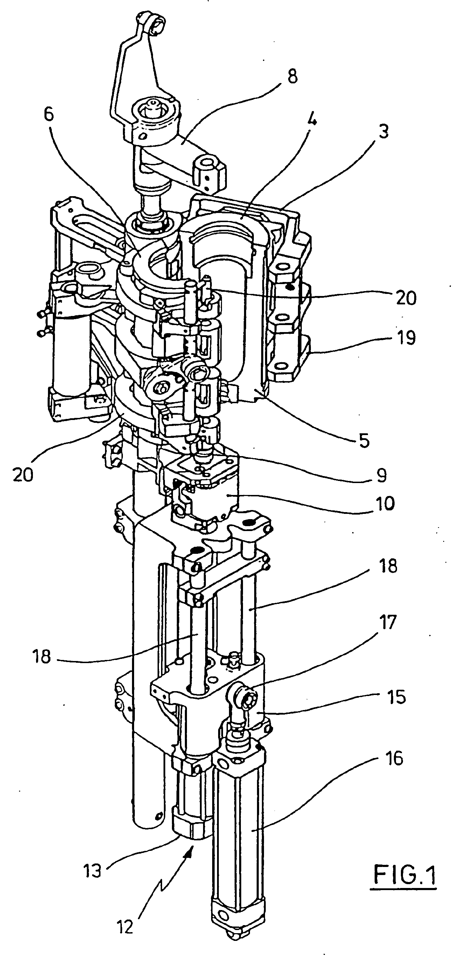

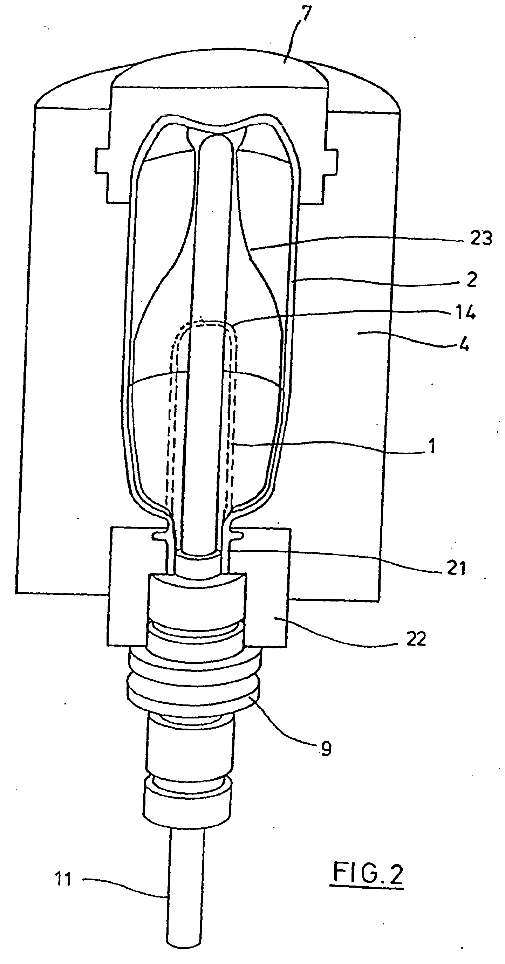

Eine Anwendung der Drehverbindung zur Signalübertragung kann beispielsweise bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

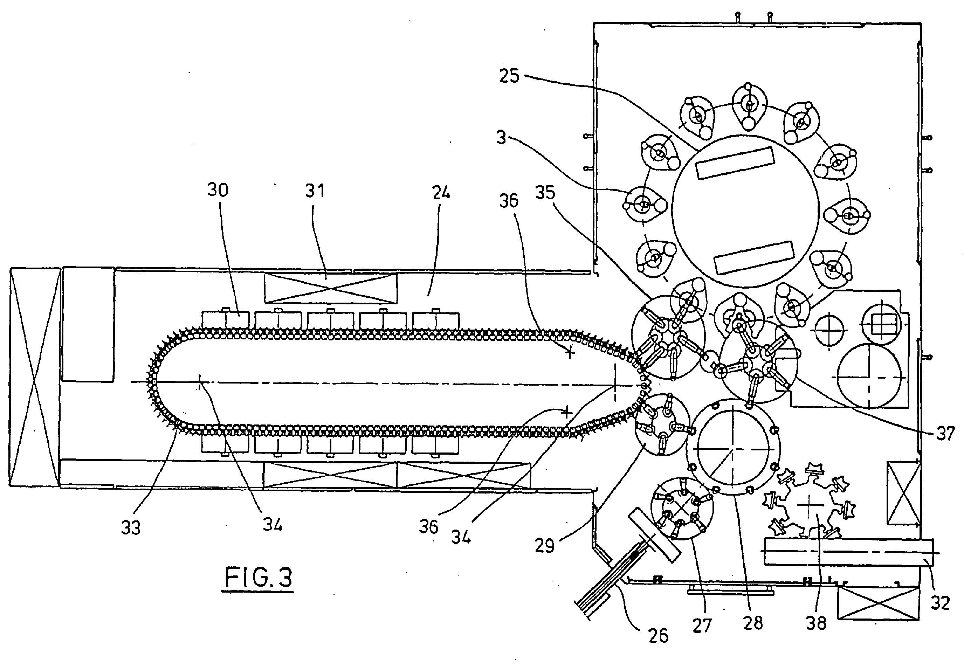

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

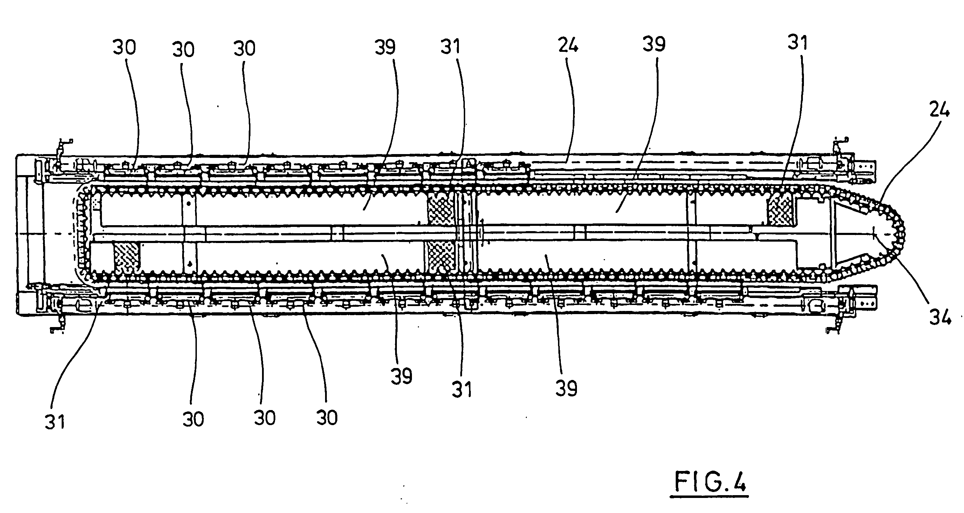

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

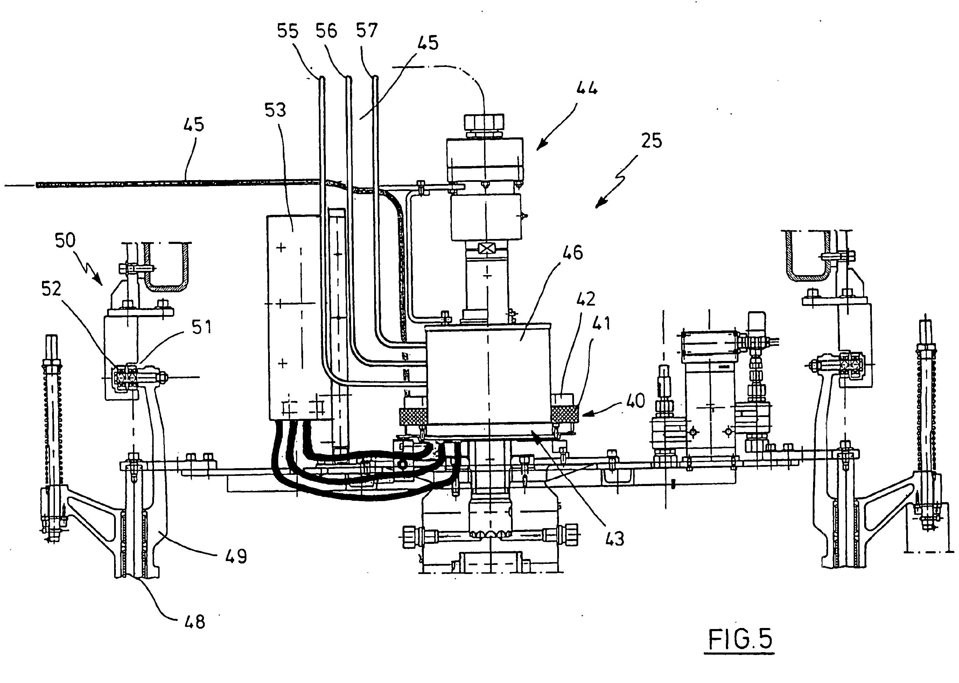

Fig. 5 zeigt eine Drehverbindung (40) zur Signalübertragung, die ein ringartig konstruiertes Basiselement (41) sowie ein beim dargestellten Ausführungsbeispiel oberhalb des Basiselementes angeordnetes Korrespondenzelement (42) aufweist. Die Drehverbindung ist als ein Schleifringdrehverteiler ausgebildet. Alternativ ist auch die Verwendung einer kontaktlosen Drehverbindung (40) möglich, bei der eines der Elemente (41, 42) als ein Sender und das andere Element (41, 42) als ein Empfänger ausgebildet ist. Die Datenübertragung kann kontaktlos beispielsweise optisch oder unter Verwendung von elektromagnetischen Wellen erfolgen. Das Basiselement (41) begrenzt eine Durchgangsöffnung (43), in deren Bereich nicht dargestellte weitere Bauelemente angeordnet werden können.

Bei der Ausführungsform gemäß Fig. 5 ist die Drehverbindung (40) im Bereich eines als Blasrad (25) ausgebildeten Tragrades angeordnet. Im Bereich der Durchgangsöffnung (43) des Basiselementes (41) ist bei diesem Ausführungsbeispiel ein Versorgungselement (44) angeordnet, das als ein Drehverteiler für ein flüssiges Betriebsmittel ausgebildet ist. Das Korrespondenzelement (42) ist an einen Bus (45) angeschlossen.

Fig. 5 zeigt einen in lotrechter Richtung oberen Bereich des in Fig. 3 dargestellten Blasrades (25). Das Versorgungselement (44) ist hier zur Zuführung von Druckluft ausgebildet. Eine Montageplatte (47) haltert den mitrotierenden Teil des Versorgungselementes (44) und stabilisiert Längssäulen (48) der Blasstation (3). Von den Blasstationen (3) sind jeweils Tragelemente (49) für die in der Zeichnung nicht mehr erkennbaren Bodenteile (7) dargestellt. Die Tragelemente (49) werden unter Verwendung einer Kurvensteuerung (50) positioniert. Die Kurvensteuerung (50) weist hierzu Kurvenrollen (51) auf, die entlang einer ortsfest angeordneten Steuerkurve (52) positioniert werden.

Zu erkennen ist in Fig. 5 ebenfalls ein Steuerungskasten (53), der wenigstens einen Teil der für Steuerfunktionen auf dem Blasrad (25) erforderlichen elektrischen und elektronischen Komponenten aufnimmt. Der Steuerungskasten (53) ist über eine Verbindungsleitung an das Basiselement (41) der Drehverbindung (40) angeschlossen.

Gemäß dem Ausführungsbeispiel in Fig. 5 besteht der Bus (45) aus einem Ethernet-Bus (55), einem Profi-Bus (56) sowie einem USB-Bus (57). Grundsätzlich ist es auch denkbar, den Bus (45) nur aus einem einzelnen der Bussysteme (55, 56, 57) oder aus einer Kombination von zwei dieser Bussysteme zu realisieren. Ebenfalls ist es denkbar, den Bus (45) um zusätzliche Buskomponenten zur jeweils gewählten Gesamt- oder Teilkombination zu erweitern.

Der Ethernet-Bus (55) dient zu einer Datenübertragung mit Datenraten bis zu 100 Mbit/s. Es werden hierdurch Online-Verbindungen zu Programmiergeräten hergestellt oder eine Datenübertragung zu Eingabe/Ausgabe-Modulen durchgeführt.

Der Profibus (56) dient vorzugsweise zu einer Datenübertragung mit Datenraten bis zu 12,5 Mbit/s. Eine bevorzugte Anwendung bei der Datenübertragung erfolgt bei der Datenübertragung zu Eingabe- und Ausgabemodulen.

Die Verwendung des USB-Busses (57) erfolgt bevorzugt bei Datenraten im Bereich von 1,5 bis zu 480 Mbit/s. Eine typische Anwendung erfolgt bei der Datenübertragung für Meßwerterfassungssysteme.

Die durch den Bus (45) bereitgestellten hohen Kapazitäten zur Datenübertragung ermöglichen es insbesondere, im Bereich des Steuerungskastens (53) auf dem Tragrad nur relativ wenige Steuerungskomponenten anzuordnen oder auf die Verwendung von Steuerungskomponenten in diesem Bereich sogar vollständig zu verzichten. Die Anordnung dieser Komponenten kann statt dessen im stationären Bereich der Vorrichtung erfolgen.

## Patentansprüche

1. Vorrichtung zur Bearbeitung von Werkstücken, die ein rotierendes Tragrad aufweist, auf dem mindestens zwei Bearbeitungsstationen angeordnet sind und das mindestens eine Drehverbindung (40) zur Signalübertragung aufweist, und bei der an die Drehverbindung (40) mindestens ein Bus (45) zur Datenübertragung angeschlossen ist, **dadurch gekennzeichnet, daß** der Bus (45) mindestens einen Ethernet-Bus aufweist und daß eine Steuerung für die Bearbeitungsstation mindestens teilweise stationär außerhalb des Tragrades angeordnet und über die Drehverbindung (40) sowie über den Bus derart mit auf dem Tragrad angeordneten Aktoren im Bereich der Bearbeitungsstation verbunden ist, daß der Ethernet-Bus sowohl an ein stationäres Korrespondenzelement (42) der Drehverbindung (40) als auch an ein mit dem Tragrad verbundenes Basiselement (41) der Drehverbindung (40) angeschlossen ist.

2. Vorrichtung nach Anspruch 1, **dadurch gekennzeichnet, daß** die Drehverbindung (40) zur optischen Datenübertragung ausgebildet ist.

3. Vorrichtung nach Anspruch 1, **dadurch gekennzeichnet, daß** die Drehverbindung (40) zur Datenübertragung unter Verwendung elektromagnetischer Wellen ausgebildet ist.

4. Vorrichtung nach Anspruch 1, **dadurch gekennzeichnet, daß** die Drehverbindung (40) kontaktlos ausgebildet ist.

5. Vorrichtung nach Anspruch 1, **dadurch gekennzeichnet, daß** die Drehverbindung (40) zur elektrischen Datenübertragung ausgebildet ist.

6. Vorrichtung nach Anspruch 1, **dadurch gekennzeichnet, daß** die Drehverbindung (40) als ein Schleifring-Drehverteiler ausgebildet ist.

7. Vorrichtung nach einem der Ansprüche 1 bis 6, **dadurch gekennzeichnet, daß** der Bus (45) zur elektrischen Datenübertragung ausgebildet ist.

8. Vorrichtung nach einem der Ansprüche 1 bis 6, **dadurch gekennzeichnet, daß** der Bus (45) zur optischen Datenübertragung ausgebildet ist.

9. Vorrichtung nach einem der Ansprüche 1 bis 8, **dadurch gekennzeichnet, daß** der Bus (45) einen Profibus (56) aufweist.

10. Vorrichtung nach einem der Ansprüche 1 bis 8, **dadurch gekennzeichnet, daß** der Bus (45) einen USB-Bus (57) aufweist.

11. Vorrichtung nach einem der Ansprüche 1 bis 8, **dadurch gekennzeichnet, daß** der Bus (45) mindestens einen Ethernet-Bus (55), mindestens einen Profibus (56) sowie mindestens einen USB-Bus (57) aufweist.

12. Vorrichtung nach einem der Ansprüche 1 bis 11, **dadurch gekennzeichnet, daß** sich die Drehverbindung (40) mindestens bereichsweise um Zuführleitungen eines Versorgungselementes (44) herumerstreckt.

13. Vorrichtung nach einem der Ansprüche 1 bis 12, **dadurch gekennzeichnet, daß** die Bearbeitungsstationen zur Bearbeitung von Behältern ausgebildet sind.

14. Vorrichtung nach einem der Ansprüche 1 bis 12, **dadurch gekennzeichnet, daß** die Bearbeitungsstationen zur Bearbeitung von thermoplastischen Behältern ausgebildet sind.

15. Vorrichtung nach einem der Ansprüche 1 bis 12, **dadurch gekennzeichnet, daß** die Bearbeitungsstationen zur Bearbeitung von flaschenförmigen Behältern ausgebildet sind.

16. Vorrichtung nach einem der Ansprüche 1 bis 15, **dadurch gekennzeichnet, daß** das Tragrad als Rad einer Blasmaschine ausgebildet ist.

17. Vorrichtung nach einem der Ansprüche 1 bis 15, **dadurch gekennzeichnet, daß** das Tragrad als Rad einer Plasmabeschichtungsmaschine ausgebildet ist.

18. Vorrichtung nach einem der Ansprüche 1 bis 15, **dadurch gekennzeichnet, daß** das Tragrad als Rad einer Füllmaschine ausgebildet ist.

19. Vorrichtung nach einem der Ansprüche 1 bis 18, **dadurch gekennzeichnet, daß** eine Steuerung für die Bearbeitungsstation mindestens teilweise stationär außerhalb des Tragrades angeordnet und über die Drehverbindung (40) sowie über den Bus mit Sensoren im Bereich der Bearbeitungsstation verbunden ist.

## Claims

1. Apparatus for machining workpieces having a rotating support wheel on which at least two machining stations are arranged and which has at least one rotary connection (40) for transmitting signals and wherein at least one bus (45) for transmitting data is connected to the rotary connection (40), **characterised in that** the bus (45) has at least one ethernet bus and **in that** a controller for the machining station is arranged in an at least partially stationary manner outside the support wheel and is connected via the rotary connection (40) and via the bus to actuators arranged on the support wheel in the region of the machining station in such a way that the ethernet bus is connected both to a stationary correspondence element (42) of the rotary connection (40) and to a basic element (41), connected to the support wheel, of the rotary connection (40).

2. Apparatus according to claim 1, **characterised in that** the rotary connection (40) is configured for optical data transmission.

3. Apparatus according to claim 1, **characterised in that** the rotary connection (40) is configured for data transmission using electromagnetic waves.

4. Apparatus according to claim 1, **characterised in that** the rotary connection (40) is of contactless configuration.

5. Apparatus according to claim 1, **characterised in that** the rotary connection (40) is configured for electrical data transmission.

6. Apparatus according to claim 1, **characterised in that** the rotary connection (40) is configured as a slip ring rotary distributor.

7. Apparatus according to any one of claims 1 to 6, **characterised in that** the bus (45) is configured for electrical data transmission.

8. Apparatus according to any one of claims 1 to 6, **characterised in that** the bus (45) is configured for optical data transmission.

9. Apparatus according to any one of claims 1 to 8, **characterised in that** the bus (45) has a Profibus (56).

10. Apparatus according to any one of claims 1 to 8, **characterised in that** the bus (45) has a USB (57).

11. Apparatus according to any one of claims 1 to 8, **characterised in that** the bus (45) has at least one ethernet bus (55), at least one Profibus (56) and at least one USB (57).

12. Apparatus according to any one of claims 1 to 11, **characterised in that** the rotary connection (40) extends, at least in certain regions, around feed lines of a supply element (44).

13. Apparatus.according to any one of claims 1 to 12, **characterised in that** the machining stations are configured for the machining of containers.

14. Apparatus according to any one of claims 1 to 12, **characterised in that** the machining stations are configured for the machining of thermoplastic containers.

15. Apparatus according to any one of claims 1 to 12, **characterised in that** the machining stations are configured for the machining of bottle-shaped containers.

16. Apparatus according to any one of claims 1 to 15, **characterised in that** the support wheel is configured as the wheel of a blowing machine.

17. Apparatus according to any one of claims 1 to 15, **characterised in that** the support wheel is configured as the wheel of a plasma coating machine.

18. Apparatus according to any one of claims 1 to 15, **characterised in that** the support wheel is configured as the wheel of a filling machine.

19. Apparatus according to any one of claims 1 to 18, **characterised in that** a controller for the machining station is arranged in an at least partially stationary manner outside the support wheel and is connected via the rotary connection (40) and via the bus to sensors in the region of the machining station.

## Revendications

1. Appareil pour l'usinage de pièces, qui présente une roue support rotative, sur laquelle au moins deux postes de travail sont agencés, et qui présente au moins une jonction tournante (40) pour le transfert de signal, et pour laquelle sur la jonction tournante (40), est raccordé au moins un bus (45) pour le transfert des données, **caractérisé en ce que** le bus (45) présente au moins un bus éthernet et **en ce qu'**une commande pour le poste de travail est agencé au moins partiellement de manière stationnaire, à l'extérieur de la roue support et est relié par la jonction tournante (40), ainsi que par le bus, à des acteurs agencés sur la roue support au niveau du poste de travail, **en ce que** le bus éthernet est raccordé non seulement à un élément correspondant stationnaire (42) de la jonction tournante (40), mais également à un élément de base (41) relié à la roue support de la jonction tournante (40).

2. Appareil selon la revendication 1, **caractérisé en ce que** la jonction tournante (40) est conformée pour le transfert de données optique.

3. Appareil selon la revendication 1, **caractérisé en ce que** la jonction tournante (40) est conformée pour le transfert de données en utilisant des ondes électromagnétiques.

4. Appareil selon la revendication 1, **caractérisé en ce que** la jonction tournante (40) est conformée sans contact.

5. Appareil selon la revendication 1, **caractérisé en ce que** la jonction tournante (40) est conformée pour le transfert électrique des données.

6. Appareil selon la revendication 1, **caractérisé en ce que** la jonction tournante (40) est conformée comme un répartiteur à bague glissante.

7. Appareil selon l'une des revendications 1 à 6, **caractérisé en ce que** le bus (41) est formé pour le transfert électrique des données.

8. Appareil selon l'une des revendications 1 à 6, **caractérisé en ce que** le bus (41) est formé pour le transfert optique des données.

9. Appareil selon l'une des revendications 1 à 8, **caractérisé en ce que** le bus (45) présente un profibus (56).

10. Appareil selon l'une des revendications 1 à 8, **caractérisé en ce que** le bus (45) présente un bus USB (57).

11. Appareil selon l'une des revendications 1 à 8, **caractérisé en ce que** le bus (45) présente au moins un bus éthernet (55), au moins un profibus (56) ainsi qu'au moins un bus USB (57).

12. Appareil selon l'une des revendications 1 à 11, **caractérisé en ce que** la jonction tournante (40) contourne au moins par zone, des conduites d'alimentation d'un élément de distribution (44).

13. Appareil selon l'une des revendications 1 à 12, **caractérisé en ce que** les postes de travail sont conformés pour le traitement de récipients.

14. Appareil selon l'une des revendications 1 à 12, **caractérisé en ce que** les postes de travail sont conformés pour le traitement de récipients thermoplastiques.

15. Appareil selon l'une des revendications 1 à 12, **caractérisé en ce que** les postes de travail sont conformés pour le traitement de récipients de type bouteille.

16. Appareil selon l'une des revendications 1 à 15, **caractérisé en ce que** la roue support est formée comme une roue d'une machine de soufflage.

17. Appareil selon l'une des revendications 1 à 15, **caractérisé en ce que** la roue support est formée comme une roue d'une machine de revêtement par plasma.

18. Appareil selon l'une des revendications 1 à 15, **caractérisé en ce que** la roue support est formée comme une roue d'une machine de remplissage.

19. Appareil selon l'une des revendications 1 à 18, **caractérisé en ce qu'**une commande du poste de travail est agencée de manière au moins partiellement stationnaire hors de la roue support et est reliée par la jonction tournante (40) ainsi que par le bus, avec des capteurs au niveau du poste de travail.
